(19) Europäisches Patentamt
European Patent Office
Office européen des brevets

(11) **EP 2 469 350 A1**

(12) **DEMANDE DE BREVET EUROPEEN**

(43) Date de publication:
**27.06.2012 Bulletin 2012/26**

(51) Int Cl.:
***G04B 5/22*** *(2006.01)*

(21) Numéro de dépôt: **10196325.4**

(22) Date de dépôt: **21.12.2010**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **Association Suisse pour la Recherche Horlogère**
**2002 Neuchâtel (CH)**

(72) Inventeur: **Perreux, Dominique**
**25480, Pirey (FR)**

(74) Mandataire: **Richard, François-Régis**
**e-Patent S.A.**
**Rue Saint-Honoré, 1**
**Case postale 2510**
**2001 Neuchâtel (CH)**

(54) **Mécanisme de remontage pneumatique pour pièce d'horlogerie comportant une source d'énergie mécanique**

(57)    Mécanisme pneumatique pour pièce d'horlogerie comportant une source d'énergie mécanique, agencé pour recharger la source d'énergie mécanique et comprenant une enceinte hermétique (20,30) présentant un volume susceptible d'alternativement croître et décroître en fonction des variations de la température environnante. L'enceinte hermétique contient un mélange de réactifs, comprenant un alliage métallique agencé au contact d'un gaz et susceptible de donner lieu à un à au moins un changement de phase en fonction des variations de la température environnante. Le mélange de réactifs présente avantageusement un coefficient ΔP/ΔT sensiblement supérieur à 0.01 bar.°C-1 dans des plages de fonctionnement, en température, comprise sensiblement entre 0 et 50°C et, en pression, comprise sensiblement entre 1 et 50° C et, en pression, comprise sensiblement entre 1 et 50 bars. En outre, le mélange est choisi de manière à ce que la différence minimale possible entre les températures associées à des variations consécutives contraires de la température environnante soit préférablement inférieure ou égale à 4°C.

Fig. 1

EP 2 469 350 A1

## Description

### Domaine technique

La présente invention concerne un mécanisme pneumatique pour pièce d'horlogerie comportant une source d'énergie mécanique, agencé pour recharger cette dernière et, comprenant une enceinte hermétique présentant un volume susceptible d'alternativement croître et décroître en fonction des variations de la température environnante.
L'invention concerne également une pièce d'horlogerie comportant un tel mécanisme pneumatique agencé pour recharger sa source d'énergie mécanique.

### Etat de la technique

De telles pièces d'horlogerie sont déjà connues de l'état de la technique. En particulier, la société Jaeger-LeCoultre commercialise depuis de nombreuses années une pendule, vendue sous la marque Atmos, dont la source d'énergie mécanique est rechargée à partir de déformations subies par une capsule hermétique, remplie d'un fluide, en fonction des variations de la température environnante.
Le principe de base de cette pendule est par exemple décrit dans les brevets CH 198355 ou CH 199527.
Cependant, il faut noter qu'un tel mécanisme pneumatique n'a pas été mis en oeuvre dans d'autres types de pièces d'horlogerie, notamment dans des montres bracelet, du fait que les adaptations requises posent surtout des problèmes de dimensionnement.

### Divulgation de l'invention

Un but principal de la présente invention est d'améliorer les mécanismes connus de l'art antérieur, en proposant un mécanisme pneumatique destiné à recharger la source d'énergie mécanique d'une pièce d'horlogerie avec un rendement amélioré, au point notamment d'en rendre possible l'intégration dans une montre-bracelet.
A cet effet, la présente invention concerne plus particulièrement un mécanisme pneumatique du type mentionné plus haut, caractérisé par le fait que l'enceinte hermétique contient un mélange de réactifs, comprenant un alliage métallique agencé au contact d'un gaz et, susceptible de donner lieu à au moins un changement de phase en fonction des variations de la température environnante. En outre, le mélange de réactifs présente un coefficient $\Delta P/\Delta T$ sensiblement supérieur à 0.01 bar.°C$^{-1}$ dans des plages de fonctionnement,

en température, comprise sensiblement entre 0 et 50°C et,
en pression, comprise sensiblement entre 1 et 50 bars.

Le mélange de réactifs est par ailleurs choisi de manière à ce que la différence minimale possible entre les températures associées à des variations consécutives contraires de la température environnante soit préférablement sensiblement inférieure ou égale à 4°C.
Grâce à ces caractéristiques, le mécanisme pneumatique selon la présente invention offre un potentiel intéressant, en termes de source énergétique, pour assurer un apport d'énergie à une source d'énergie secondaire, préférablement mécanique, quelles que soit les dimensions de la pièce d'horlogerie correspondante. En effet, la nature du phénomène physique intervenant dans le mécanisme pneumatique selon la présente invention permet de réaliser ce mécanisme avec un encombrement moindre que dans le cas de l'art antérieur.
De manière préférée, le mécanisme selon la présente invention comporte un alliage métallique qui réagit avec du dihydrogène ou du dideutérium pour former un alliage d'hydrure métallique. Plus particulièrement, l'alliage métallique peut répondre à une formulation générale du type AB$_5$ dans laquelle A est un métal ou un mélange métallique et B est un métal ou un mélange métallique. A peut comporter l'un au moins des éléments choisis dans le groupe comprenant Ce, La, Nd, Pr. B peut comporter l'un au moins des éléments choisis dans le groupe comprenant Co, Ni, Sn.
Plus précisément, l'alliage métallique peut être choisi dans le groupe comprenant (La, Ce)(Ni, Co)$_5$, (La, Ce)(Ni, Co)$_{5+\varepsilon}$ et (La, Ce)(Ni, Sn)$_{5+\varepsilon}$ avec $\varepsilon$ qui peut être compris entre 0 et 0.2, à titre illustratif non limitatif.
Grâce à ces caractéristiques, les variations de pression survenant dans l'enceinte hermétique, en fonction des variations de la température environnante, permettent d'assurer un apport d'énergie suffisant à la source d'énergie mécanique de la pièce d'horlogerie correspondante.
Selon des variantes particulières, le coefficient $\Delta P/\Delta T$ est préférablement supérieur à 0.05 bar.°C$^{-1}$, plus préférablement supérieur à 0.1 bar.°C$^{-1}$, dans des plages de fonctionnement préférées,

en température, comprise sensiblement entre 15 et 40°C, plus préférablement entre 15 et 30°C, et/ou,
en pression, comprise sensiblement entre 1 et 20 bars, plus préférablement entre 1 et 10 bars.

En outre, la différence minimale possible entre les températures associées à des variations consécutives contraires de la température environnante est préférablement inférieure à 2°C, plus préférablement inférieure à 1 °C.

Grâce à ces caractéristiques, les propriétés du mécanisme pneumatique selon l'invention sont adaptées aux conditions d'utilisation courantes des pièces d'horlogerie, de manière générale.

Par ailleurs, l'enceinte hermétique est avantageusement configurée de telle manière que les variations de son volume sont associées à sa déformation ou au déplacement d'un élément mobile, tel un piston, suivant une seule direction, afin d'optimiser le travail récupéré à partir de cette déformation ou de ce déplacement.

L'invention concerne également une pièce d'horlogerie comportant un mécanisme pneumatique comme mentionné ci-dessus, caractérisée par le fait qu'elle comporte un système de conversion associé au moins indirectement, d'une part, à l'enceinte hermétique et, d'autre part, à la source d'énergie mécanique pour recharger cette dernière à partir des variations de volume de l'enceinte hermétique.

**Brève description des dessins**

D'autres caractéristiques et avantages de la présente invention apparaîtront plus clairement à la lecture de la description détaillée d'un mode de réalisation préféré qui suit, faite en référence aux dessins annexés donnés à titre d'exemples non limitatifs et dans lesquels:

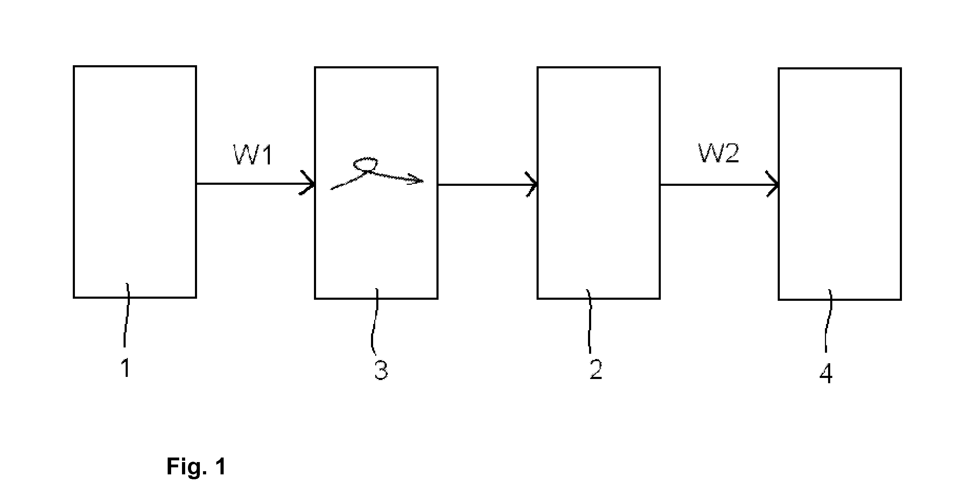

**[0019]** - la figure 1 représente un schéma blocs illustrant le principe de la présente invention;

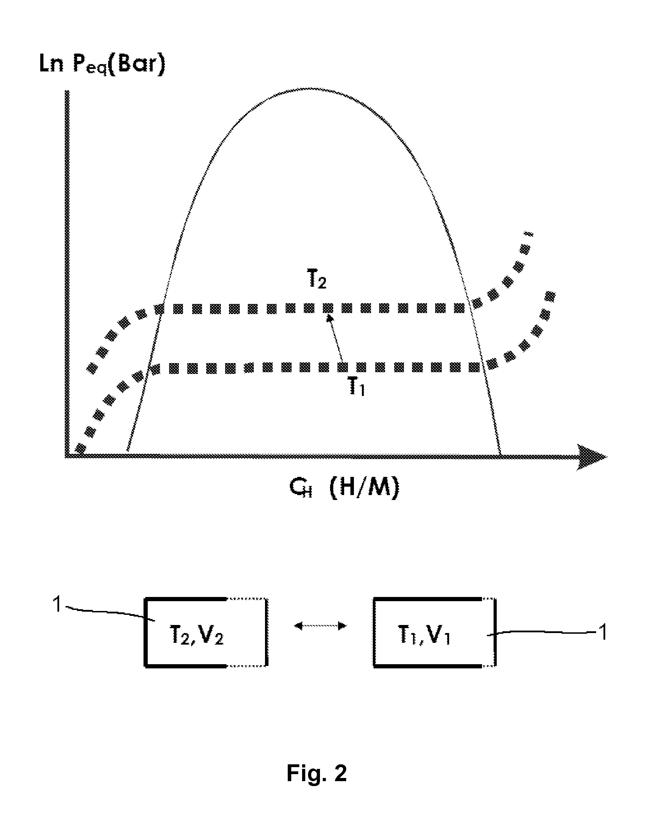

**[0020]** - la figure 2 représente un diagramme de phases permettant d'exposer le principe de la présente invention;

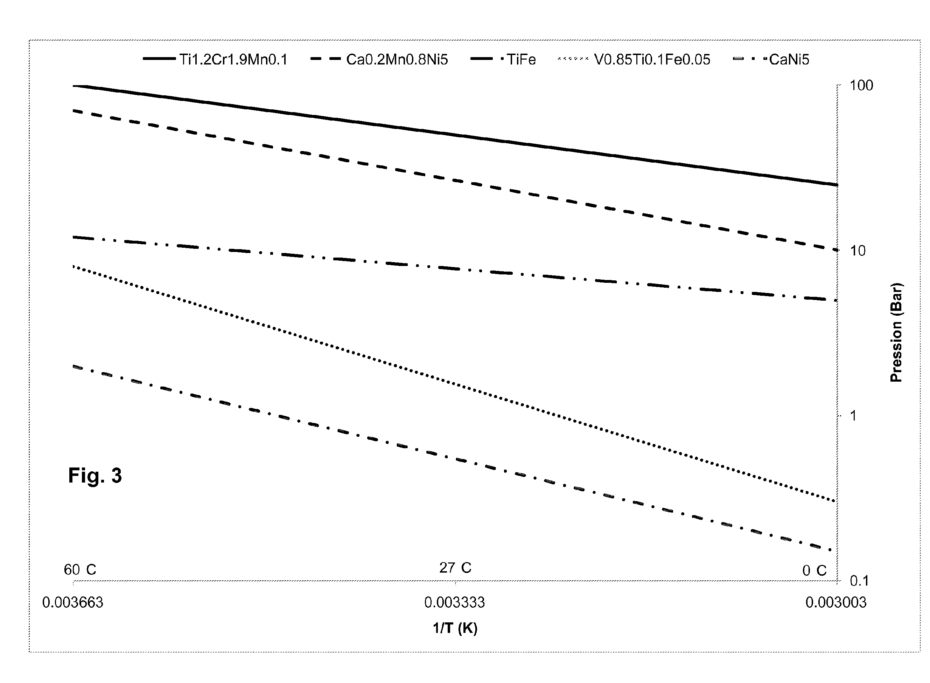

**[0021]** - la figure 3 représente un diagramme illustrant la loi de van't Hoff pour une sélection de composés;

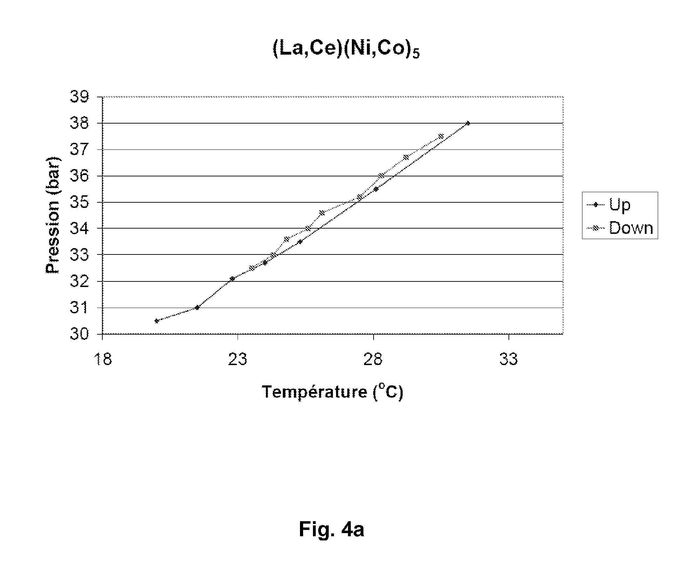

**[0022]** - la figure 4a représente un premier diagramme illustrant les résultats de mesures expérimentales;

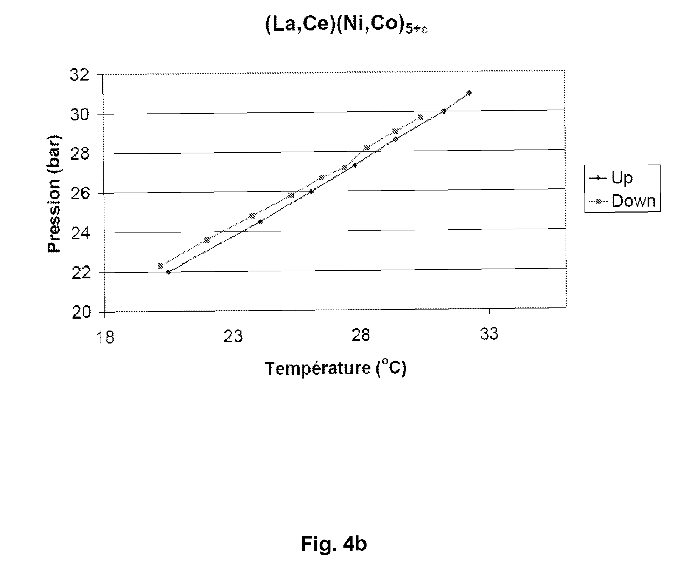

**[0023]** - la figure 4b représente un second diagramme illustrant les résultats de mesures expérimentales supplémentaires;

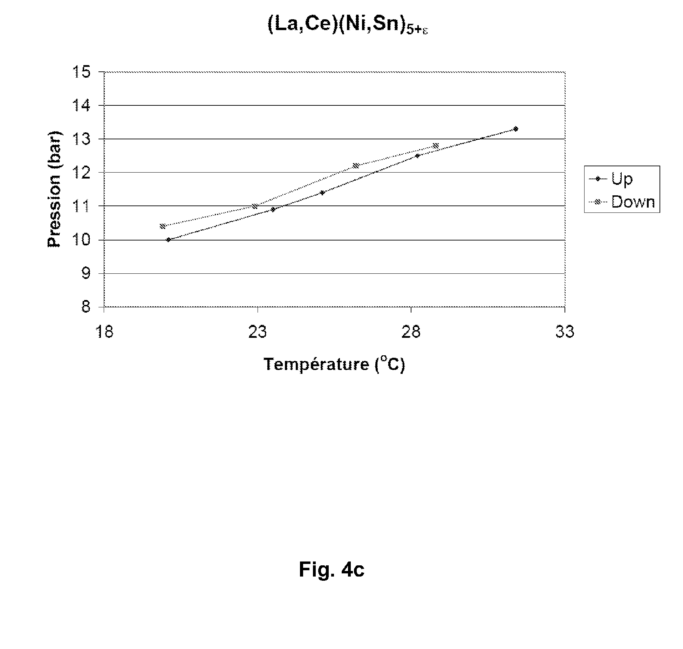

**[0024]** - la figure 4c représente un troisième diagramme illustrant les résultats de mesures expérimentales supplémentaires;

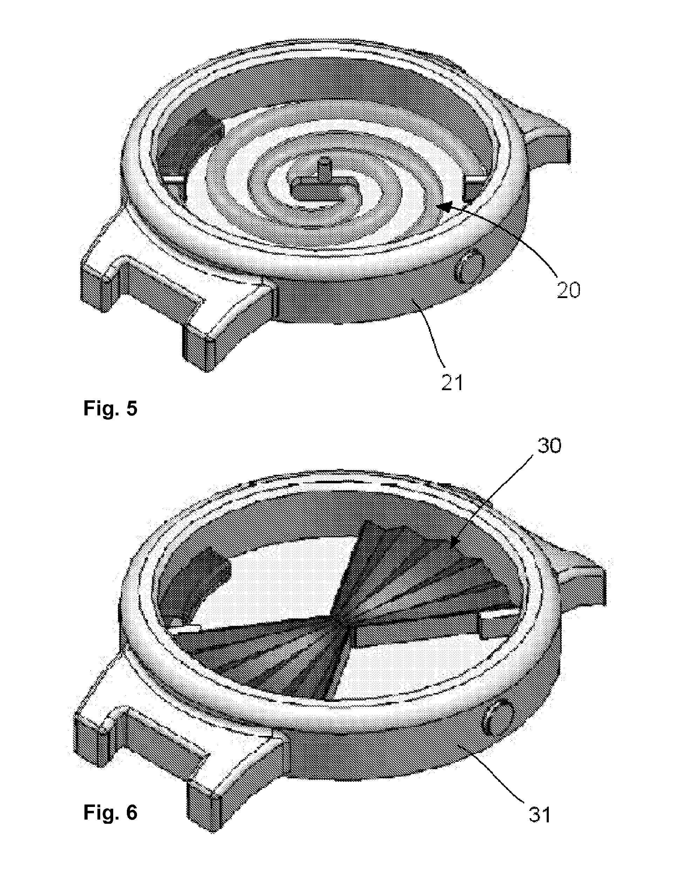

**[0025]** - la figure 5 représente une vue schématique en perspective d'un premier exemple de mise en oeuvre d'un mécanisme pneumatique selon la présente invention dans une montre-bracelet, et

**[0026]** - la figure 6 représente une vue schématique en perspective d'un second exemple de mise en oeuvre d'un mécanisme pneumatique selon la présente invention dans une montre-bracelet.

**Mode(s) de réalisation de l'invention**

La figure 1 représente un schéma blocs illustrant le principe général de la présente invention.

Selon un mode de réalisation préféré de la présente invention, le mécanisme de remontage pneumatique comporte une source d'énergie primaire 1 permettant de recharger une source d'énergie secondaire 2, par l'intermédiaire d'un mécanisme de conversion 3, la source d'énergie secondaire étant agencée pour alimenter un mouvement horloger 4 en énergie mécanique.

De manière avantageuse, la source d'énergie primaire comprend une enceinte hermétique présentant un volume susceptible d'alternativement croître et décroître en fonction de variations contraires de la température environnante. Plus particulièrement, la présente invention est basée sur le fait que l'enceinte hermétique contient un mélange de réactifs, comprenant un alliage métallique agencé au contact d'un gaz et, susceptible de donner lieu à au moins un changement de phase en fonction des variations de la température environnante, ce changement de phase ayant un impact sur la quantité de gaz présent dans l'enceinte hermétique et donc sur le volume de cette dernière.

Pour garantir une bonne efficacité du mécanisme de remontage dans les conditions usuelles de fonctionnement d'une pièce d'horlogerie, le mélange de réactifs présente préférablement un coefficient $\Delta P/\Delta T$ sensiblement supérieur à $0.01$ bar.$°C^{-1}$ dans des plages de fonctionnement,

en température, comprise sensiblement entre 0 et 50°C et,

en pression, comprise sensiblement entre 1 et 50 bars et,

est choisi de manière à ce que la différence minimale possible entre des températures, dans l'enceinte hermétique, associées à des variations consécutives contraires de la température environnante soit sensiblement inférieure ou égale à 4°C, préférablement inférieure à 2°C, encore plus préférablement inférieure à 1 °C.

Autrement dit, à titre d'exemple, si le mélange de réactifs subit, dans un premier temps, une hausse de température puis, dans un second temps, une baisse de température d'une amplitude de 4°C à partir de la température maximale atteinte lors de la hausse, il donnera avantageusement lieu à des changements de phases respectifs contraires, intervenant sensiblement à des paliers respectifs en température espacés l'un de l'autre de 4°C au maximum.

Une telle caractéristique garantit une réactivité du système aux variations de température les plus couramment subies par une pièce d'horlogerie, dans le cadre d'une utilisation standard.

En effet, la Demanderesse a effectué des mesures statistiques relatives aux variations de la température environnante subies notamment par une montre-bracelet. Il ressort de ces mesures que les occurrences relatives à des variations négatives ou positives de la température jusqu'à environ 4°C d'amplitude sont significatives. On en déduit que l'on peut raisonnablement considérer cette valeur comme valeur limite efficace admissible pour la différence entre les températures associées à des variations consécutives contraires de la température environnante. On pourra avantageusement considérer que 2°C, voire 1 °C, constitue cette valeur limite, pour améliorer la sensibilité du mécanisme aux variations de la température environnante, du fait que les occurrences de variations de température mesurées pour ces valeurs sont plus nombreuses que pour la valeur de 4°C.

Du point de vue du composé à sélectionner, cette valeur se traduit par la nécessité d'avoir une hystérésis d'amplitude sensiblement inférieure ou égale à 4°C entre les courbes relatives, respectivement, à une montée en température et à une descente en température, sur un diagramme de phases tel que celui représenté sur la figure 2.

Le diagramme de phases de la figure 2 illustre le comportement d'un mélange de réactifs répondant à certains critères bien connus pour l'homme du métier et qui ne seront pas décrits plus en détail ici.

Plus précisément, ce diagramme représente le pourcentage de dihydrogène dans le mélange de réactifs en fonction de la température T et de la pression P. Il illustre en particulier le comportement d'un mélange de réactifs comprenant un alliage d'hydrure métallique et du dihydrogène.

L'hydrogène réagit avec beaucoup de métaux de transition pour former des hydrures. Parmi ces métaux, les lanthanides sont parmi les plus réactifs. Beaucoup de ces métaux ou intermétalliques (M) correspondants forment un hydrure ($M H_n$) qui s'écarte fortement de la formule stoechiométrique (n=1, 2, etc..) et peuvent former des systèmes multiphases.

La formulation de ces intermétalliques est généralement notée de façon plus précise que le M ci-dessus, sous une forme de type $AB_n$.

En présence d'hydrogène (généralement sous forme de dihydrogène, mais le dideutérium peut également convenir à la mise en oeuvre de la présente invention), ces métaux ou intermétalliques forment donc des hydrures, la réaction correspondante s'accompagnant d'une libération de chaleur. La réaction qui peut être associée à celle d'un changement de phase est alors un équilibre :

$$M + nH_2 <\text{-}> MH_{2n} + Q$$

$$\alpha\text{-phase} + nH_2 <\text{-}> \beta\text{-phase} + Q$$

Les conditions de cet équilibre sont fixées par la pression de dihydrogène et la température environnante.

Il ressort de la figure 2 qu'à température fixée, le changement de phase fait apparaître un plateau de transformation, qui peut être relativement plat suivant la nature de l'alliage considéré. A titre d'exemple non limitatif, on notera que $LaNi_5$ présente un plateau de ce type.

On peut montrer qu'il existe une relation, dite de van't Hoff, entre la pression du plateau et l'inverse de la température:

$$Log(P_{Plateau}) = \frac{\Delta H}{RT} - \frac{\Delta S}{R}$$

où $\Delta H$ et $\Delta S$ représentent respectivement l'enthalpie de formation et l'entropie, ces deux grandeurs dépendant du composé considéré.

Il existe un grand nombre d'hydrures métalliques ayant des enthalpies de formation et entropies différentes et, capables de travailler dans différentes gammes de température, tel que cela ressort du diagramme de la figure 3, qui illustre la loi de van't Hoff pour une sélection particulière de composés métalliques.

Le principe sous-jacent à la présente invention réside dans le fait d'utiliser la pression de plateau mentionnée ci-dessus pour en retirer un travail mécanique qui permettra de recharger la source d'énergie mécanique d'une pièce d'horlogerie.

En effet, si on considère un mélange de réactifs, comprenant un alliage d'hydrure métallique et du dihydrogène, placé dans une enceinte hermétique dont le volume est susceptible de varier, à température donnée et en situation d'équilibre, la pression d'hydrogène a tendance à accroître le volume de l'enceinte (lorsqu'elle est supérieure à la pression environnante). Dans le même temps, la pression régnant à l'intérieur de l'enceinte a tendance à diminuer. Pour maintenir l'équilibre du système, le changement de phase est activé, l'alliage d'hydrure métallique libérant de l'hydrogène pour faire augmenter la pression dans l'enceinte et retrouver les conditions d'un équilibre.

De manière similaire, une variation de la température environnante a tendance à modifier l'équilibre du système et à modifier le volume de l'enceinte hermétique par modification de sa pression interne. Ainsi, la présente invention prévoit de disposer un mélange de réactifs dans une enceinte dont le volume est susceptible de varier pour tirer profit des variations de la température environnante.

On notera que le mécanisme pneumatique peut être agencé de manière à exploiter les variations de volume de l'enceinte hermétique dans un seul sens donné, c'est-à-dire soit en augmentation de volume, soit en diminution de volume, ou dans les deux sens, sans sortir du cadre de la présente invention.

A titre d'exemple, on a illustré, sur la figure 2, le comportement d'une enceinte hermétique exposée à une variation de température passant de T1 à T2, T2 étant supérieure à T1. L'augmentation de la température entraîne une augmentation de la pression dans l'enceinte, soit une augmentation du volume de cette dernière lorsque ce volume est déformable et, dans le même temps, une diminution de la proportion en dihydrogène dans le mélange de réactif.

On notera que la variation du volume de l'enceinte hermétique peut se présenter sous deux natures différentes, toutes deux étant adaptées à la mise en oeuvre de la présente invention. En effet, le volume de l'enceinte peut varier suite à une déformation d'une partie au moins de sa paroi ou, alternativement, suite au déplacement d'une partie mobile, tel un piston.

On rappellera, comme déjà souligné précédemment, que le mélange de réactifs pour la mise en oeuvre de la présente invention devrait préférablement être choisi de telle manière que deux changements de phases consécutifs, respectivement associés à une augmentation et à une diminution de la température environnante, interviennent à des températures respectives du mélange de réactifs dont la différence minimale possible est inférieure à une valeur limite donnée. Le respect de cette dernière condition permet d'assurer que le système fonctionne quasiment de manière réversible. En d'autres termes, plus la différence entre les températures respectives associées à deux variations consécutives contraires de la température environnante est faible et plus le système est sensible aux variations de la température environnante. Une prise en compte de ce paramètre permet donc d'améliorer le fonctionnement du mécanisme pneumatique selon l'invention par une augmentation de sa sensibilité aux variations de la température environnante.

Ainsi, les travaux de recherche de la Demanderesse ont notamment consisté en une identification de classes de composés susceptibles de convenir pour la réalisation d'un mécanisme de remontage pneumatique du type qui vient d'être décrit.

Plus précisément, outre la condition ci-dessus, les composés adaptés à la mise en oeuvre d'un tel mécanisme doivent présenter une plage de fonctionnement en température située autour de la température ambiante usuelle et fournir une pression de l'ordre de quelques bars autour de cette température.

De plus, la variation de pression provoquée par une variation de température donnée doit être suffisamment importante pour permettre une variation significative du volume de l'enceinte hermétique, condition nécessaire à la récupération d'un travail mécanique satisfaisant. Autrement dit, le rapport $\Delta P/\Delta T$ doit préférablement présenter une valeur supérieure à un certain seuil, tel que mentionné plus haut.

Les travaux de la Demanderesse ont donc également visé à permettre l'identification de classes de composés répondant de manière satisfaisante à l'exigence de retirer un travail mécanique suffisant du mécanisme.

Dans ce but, différentes mesures expérimentales ont été réalisées dans le but d'évaluer le travail mécanique qui peut être obtenu à partir d'une enceinte hermétique de volume variable et contenant un mélange de réactifs du type susmentionné.

Dans un premier temps, un alliage d'hydrure métallique ayant une gamme de fonctionnement autour de la température ambiante et fournissant une pression de quelques bars à cette température a été sélectionné pour conduire les essais. La famille des $LaNi_5$ correspond relativement bien à ces spécifications. Les essais ont donc été réalisés avec un composé du type $LaNi_{4.8}Al_{0.2}$, l'aluminium étant un élément qui améliore la tenue de l'alliage en termes de nombre de cycles et qui permet d'ajuster la pression d'équilibre.

A partir d'une situation d'équilibre, le mélange de réactifs a été soumis à une variation de la température environnante et, la pression dans le réservoir a été mesurée, à volume constant. Des mesures ont notamment été effectuées dans une gamme de température proche des conditions réelles de porter d'une montre-bracelet, à savoir à +/- 3°C autour d'une température moyenne de 28°C.

Globalement, une variation de pression de l'ordre de 0.1 bar a été relevée pour une variation de la température environnante d'environ 1 °C.

Des mesures expérimentales supplémentaires ont été réalisées avec un ressort monté sur le vérin d'un piston et un capteur de force, dans le but d'évaluer le travail mécanique qui peut être récupéré à partir d'un système tel que décrit plus haut.

En modifiant la température environnante, on favorise l'adsorption ou la désorption en hydrogène en relation avec l'alliage métallique. Cela a pour effet de diminuer ou d'augmenter la pression et donc la force exercée sur le vérin, entraînant une déformation du ressort dont on mesure le déplacement et la force qu'il exerce.

De manière générale, le travail mécanique fourni par le mélange de réactifs au ressort est obtenu à partir de l'équation: dW=Fdx, où F est la force et x la position de l'extrémité mobile du ressort. dx est donc l'incrément de déplacement et dW, l'incrément correspondant de travail mécanique.

Les résultats des mesures permettent de démontrer que l'on obtient les relations suivantes:

$$F=k(x+l_0),$$

et

$$P=at+b$$

Dans ces équations, x est compté à partir d'une position arbitraire dans laquelle le ressort est déjà déformé d'une longueur $l_0$, k étant la raideur du ressort utilisé et t la température environnante.

Il faut de plus considérer que la force est liée à la pression par l'équation:

$$F=PS,$$

S étant la section du piston.

On obtient donc l'expression de la force:

$$F=k(x+l_0)=S(at+b).$$

On en déduit l'expression du travail mécanique:

$$dW = S(at+b)\frac{Sa}{k}dt \cdot$$

Ainsi, pour une variation de la température environnante entre $T_0$ et $T_1$, on obtient pour le travail mécanique:

$$W(T_0 \rightarrow T_1) = \int_{T_0}^{T_1} S(at+b)\frac{Sa}{k}dt = \frac{S^2a^2}{2k}(T_1^2 - T_0^2) + \frac{S^2ba}{k}(T_1 - T_0)$$

En faisant apparaître la variation de température $\Delta T_0 = T_1 - T_0$, on en déduit:

$$W(T_0 \rightarrow T_0 + \Delta T_0) = \frac{S^2a^2}{2k}(\Delta T_0^2 + 2T_0\Delta T_0) + \frac{S^2ba}{k}\Delta T_0$$

Si on considère un cycle aller-retour, l'expression du travail devient:

$$W(T_0 \rightarrow T_0 + \Delta T_0) + W(T_0 + \Delta T_0 \rightarrow T_0) = 0$$

puisque lors de la baisse de la température environnante c'est le ressort qui fournit du travail au vérin, dans le cadre du dispositif de mesure utilisé.

En effet, le mélange de réactifs et le ressort peuvent être assimilés à un système thermodynamique fermé qui échange de l'énergie en interne uniquement. Par conséquent, dans la phase retour du cycle, c'est le ressort qui est moteur.

Bien entendu, il est envisageable de prévoir des mécanismes pneumatiques fournissant de l'énergie dans les deux sens du cycle, mais dans la suite de l'étude, un seul sens a été considéré, dans le but d'évaluer le niveau d'énergie disponible, par exemple le sens où $\Delta T_0 > 0$.

En supposant qu'un tel mécanisme est placé dans une pièce d'horlogerie et travaille dans un seul sens d'évolution de la température environnante, l'énergie qu'il fournit sur une semaine peut être exprimée comme suit:

$$W = W(T_0 \rightarrow T_0 + \Delta T = T_1) + W(T_1 \rightarrow T_1 + \Delta T_1 = T_2) + \ldots = \left| \frac{S^2 a^2}{2k}(\Delta T_0^2 + 2T_0 \Delta T_0) + \frac{S^2 ba}{k} \Delta T_0 \right| + \left| \frac{S^2 a^2}{2k}(\Delta T_1^2 + 2T_1 \Delta T_1) + \frac{S^2 ba}{k} \Delta T_1 \right| + \ldots$$

En considérant que les incréments pairs $\Delta T_0$, $\Delta T_2$,... sont positifs alors que les incréments impairs $\Delta T_1$, $\Delta T_3$,... sont négatifs, on obtient:

$$W = \sum_{i=0}^{i=N} \left[ \frac{S^2 a^2}{2k}(\Delta T_{2i}^2 + 2T_{2i} \Delta T_{2i}) + \frac{S^2 ba}{k} \Delta T_{2i} \right]$$

où N représente le nombre d'évènements de changement de la température environnante au cours d'une semaine.

En admettant en première approximation que $T_{2i} = T_{moyen}$ pour toute valeur de i, alors:

$$W = \sum_{i=0}^{i=N} \left[ \frac{S^2 a^2}{2k}(\Delta T_{2i}^2 + 2T_{moyen} \Delta T_{2i}) + \frac{S^2 ba}{k}(\Delta T_{2i}) \right]$$

On peut, en première approximation, considérer que la température environnante moyenne est de 28°C. Si on applique la relation ci-dessus aux mesures statistiques relatives aux variations de température effectuées par la Demanderesse, on obtient un ordre de grandeur pour l'énergie totale produite par semaine de 67 Joules, ce qui est très largement supérieur aux besoins d'une montre-bracelet, par exemple, que l'on peut estimer à environ 1 Joule par semaine.

Bien entendu, si l'ordre de grandeur du mécanisme pneumatique mis en oeuvre pour effectuer les mesures le rend adapté pour une intégration dans une pièce d'horlogerie du type horloge, il devrait être modifié pour permettre son intégration dans une montre-bracelet.

On déduit de l'analyse qui précède que l'énergie est proportionnelle aux surfaces d'échanges entre les différentes parties du mécanisme et, que, globalement, l'énergie que le mélange de réactifs apporte au système est de la forme:

$$w \sim f\left(R^2, d, \frac{1}{K}, T_{moyen}, \Delta T\right)$$

où R est une grandeur caractéristique du système (par exemple dans le système précédent, notamment le diamètre du piston), d représente un déplacement (par exemple dans le système précédent, le déplacement du ressort), K représente une raideur à combattre (par exemple celle d'un ressort que l'on veut recharger), tandis que $T_{moyen}$ et $\Delta T$ correspondent à l'histoire thermique de la pièce d'horlogerie.

Il ressort clairement de ce qui précède que le travail obtenu dépend fortement de la grandeur $\Delta P/\Delta T$ (le $a^2$ étant inclus dans le $R^2$), comme déjà mentionné plus haut.

Ainsi, la Demanderesse a conduit des mesures supplémentaires pour identifier des composés métalliques qui pourraient être adaptés à la mise en oeuvre de la présente invention.

Dans un premier temps, une vingtaine de compositions appartenant à plusieurs classes de composés de type $AB_5$, $AB_2$, AB, etc... ont été synthétisés et examinés du point de vue de leurs propriétés en termes d'hydrogénation. Les composés utilisés comprenaient les constituants métalliques pris dans le groupe comprenant, pour A, des alliages métalliques à base de Ce, de La, du Zr, du Ti et du Mg et, pour B, du Ni, du Fe, du Co, du Mn, de l'Al, du Sn, du Si et du Ge.

Des mesures de pression d'hydrogène ont été effectuées en fonction de la température, à volume constant, dans des gammes de température et de pression compatibles avec l'application considérée. Suite à ces mesures, il est apparu que les compositions ayant les meilleures propriétés en termes d'hydrogénation ($\Delta P/\Delta T$ et faible hystérésis en température) étaient celles de type $AB_5$.

Les caractéristiques relatives à trois compositions présentant des caractéristiques adaptées à la mise en oeuvre de l'invention sont illustrées sur les figures 4a, 4b et 4c et présentées dans le tableau ci-dessous, à titre d'exemples non limitatifs (avec sensiblement compris entre 0 et 0.2, à titre illustratif non limitatif):

| Matériau | pression | température | $\Delta T/\Delta T$ | Hystérisis |
|---|---|---|---|---|
| No 1: $(La,Ce)(Ni,Co)_5$ | 30-38 bar | 20-32°C ~0.7 | bar/°C | <0.5°C |
| No 2: $(La,Ce)(Ni,Co)_{5+\varepsilon}$ | 22-31 bar | 20-32°C ~0.7 | bar/°C | <0.5°C |
| No 3: $(La,Ce)(Ni,Sn)_{5+\varepsilon}$ | 10-13 bar | 20-31°C ~0.3 | bar/°C | <0.5°C |

Il est à noter que les valeurs du différentiel $\Delta P/\Delta T$ présentées ici sont des valeurs minimales, observées pour un volume libre donné propre au système de mesure utilisé. Une optimisation du système de mesure qui ferait intervenir un volume libre plus faible conduirait à un différentiel plus grand.

Des mesures supplémentaires, que l'homme du métier ne rencontrera pas de difficulté particulière à réaliser, ont conduit à évaluer les forces et les déformations qu'un tel alliage, placé dans un réservoir de faible volume (de l'ordre de 0.2 cm$^3$) et en contact avec un corps hermétique déformable, est en mesure de fournir lorsque le réservoir subit des cycles thermiques correspondant à des échauffements et refroidissements successifs d'une dizaine de degrés (entre 20 et 30°C environ). Ces mesures ont été effectuées avec deux variantes de système de mesure, mettant en oeuvre la déformation d'un soufflet, d'une part, et d'une membrane élastique, d'autre part.

Les forces et les déformations ainsi mesurées avec les trois alliages décrits ci-dessus ont permis à la Demanderesse d'effectuer des calculs d'énergie sur la base, d'une part, des valeurs expérimentales et en combinaison avec la méthode exposée plus haut sur le calcul du travail obtenu et, d'autre part, des données statistiques caractérisant les cycles de variation de température que subit la montre au porter, estimés sur une semaine de fonctionnement.

Ces calculs conduisent aux estimations présentées dans le tableau ci-dessous:

| Matériau | Energie hebdomadaire | Système de conversion |
|---|---|---|
| N°1 : $(La,Ce)(Ni,Co)_5$ | 7.2 J | membrane |
| N°2 : $(La,Ce)(Ni,Co)_{5+\varepsilon}$ | 5.3 J | membrane |
| N°3 : $(La,Ce)(Ni,Sn)_{5+\varepsilon}$ | 0.6 J | soufflet |

est à noter que ces valeurs sont indicatives. En effet, la valeur de l'énergie calculée est liée aux valeurs des forces et déplacements mesurés. Or, ceux-ci dépendent de la géométrie particulière du système de mesure utilisé. Ces valeurs sont donc fournies ici à titre d'exemples non limitatifs, qui permettent toutefois de démontrer que les mécanismes pneumatiques décrits rendent possible leur utilisation pour effectuer le remontage de la source d'énergie mécanique d'une pièce d'horlogerie. En particulier, comme cela a été relevé précédemment, ces mécanismes sont adaptés au remontage du ressort de barillet d'une montre-bracelet qui nécessite un apport d'énergie hebdomadaire de l'ordre de 1 Joule, pour un modèle de base.

On notera qu'en ce qui concerne la mise en oeuvre d'un mécanisme pneumatique tel que ceux qui ont été décrits ci-dessus en relation avec une application horlogère, il pourra être utile de réduire les surfaces mobiles pour prendre en compte les pressions importantes qui peuvent être mises en jeu.

Il est en outre préférable que l'élément mobile présente un déplacement important pour une force réduite, de façon à optimiser le travail mécanique disponible. Ainsi, il pourra être avantageux d'utiliser une structure, pour l'enceinte hermétique, telle qu'elle ne se déforme que suivant une seule dimension.

Dans le cas où le mécanisme pneumatique doit fonctionner suivant les deux sens de variation possibles de la température environnante, il peut être avantageux de prévoir que celui-ci est apte à fonctionner autour d'une température d'équilibre la plus statistiquement probable.

La figure 5 illustre un premier exemple d'un agencement d'un tel mécanisme pneumatique dans une montre-bracelet.

Cet agencement prévoit d'utiliser une enceinte hermétique 20 présentant la forme générale d'une spirale, dont la longueur peut varier en fonction de sa pression interne, et étant disposée dans le fond d'une boîte 21 de montre. Le mélange de réactifs, comprenant un alliage d'hydrure métallique et du dihydrogène, est placé dans cette enceinte hermétique dont la longueur va ainsi être amenée à varier en fonction de la température environnante.

A titre d'exemple, on peut prévoir qu'une extrémité mobile de l'enceinte hermétique est solidaire d'une crémaillère (non représentée), voire d'un râteau denté éventuellement incurvé, agencée en prise avec une roue d'un mécanisme de remontage d'un mouvement horloger.

Dans le cas où il est prévu que le remontage d'un ressort de barillet n'est effectué que dans un seul sens de variation de la température environnante, un cliquet de transmission unidirectionnel est avantageusement agencé entre cette roue et le ressort de barillet. Dans le cas où le remontage doit se faire dans les deux sens de variation de la température environnante, un inverseur est avantageusement agencé entre cette roue et le ressort de barillet.

La figure 6 illustre un second exemple d'un agencement d'un mécanisme pneumatique selon l'invention dans une montre-bracelet.

De manière similaire à l'agencement de la figure 5, le mécanisme de la figure 6 prévoit d'utiliser une enceinte hermétique 30 présentant la forme générale d'un soufflet double, dont l'angle au centre peut varier en fonction de sa pression interne, et étant disposé dans le fond d'une boîte 31 de montre. Le mélange de réactifs est placé dans cette enceinte hermétique dont l'ouverture angulaire va ainsi être amenée à varier en fonction de la température environnante, entraînant un déplacement de ses parois latérales. Ce déplacement peut ensuite être mis à profit pour générer un travail au moyen d'un mécanisme de conversion approprié, tel que mentionné plus haut, par exemple.

La description qui précède s'attache à décrire des modes de réalisation particuliers à titre d'illustrations non limitatives et, l'invention n'est pas limitée à la mise en oeuvre de certaines caractéristiques particulières qui viennent d'être décrites, comme par exemple les composés dont les résultats de mesure ont été mentionnés. En effet, d'autres composés peuvent répondre aux conditions posées et être mis en oeuvre dans un mécanisme pneumatique de remontage de la source d'énergie mécanique d'une pièce d'horlogerie, sans sortir du cadre de la présente invention. Il est envisageable d'utiliser d'autres alliages métalliques tant qu'un changement de phase est impliqué dans le fonctionnement du mécanisme pneumatique pour présenter une valeur suffisante de $\Delta P/\Delta T$. De même, les procédés de préparation décrits ne sont pas limitatifs et n'ont été fournis qu'à titre d'exemples.

On notera que lorsqu'il est appliqué à une montre-bracelet, le mécanisme pneumatique selon l'invention devrait comporter une enceinte dont le volume est inférieur à 5 cm$^3$, préférablement inférieur à 2 cm$^3$.

L'homme du métier ne rencontrera pas de difficulté particulière pour adapter le contenu de la présente divulgation à ses propres besoins et mettre en oeuvre un mécanisme de remontage pneumatique répondant en partie aux caractéristiques qui viennent d'être présentées, sans sortir du cadre de la présente invention. En particulier, on notera que les conditions posées en relation avec les paramètres pertinents l'ont été avec des plages de valeurs relativement larges, notamment du fait que les conditions à respecter diffèrent sensiblement selon que la pièce d'horlogerie à réaliser est une horloge ou une montre-bracelet.

**Revendications**

1. Mécanisme pneumatique pour pièce d'horlogerie comportant une source d'énergie mécanique, agencé pour recharger ladite source d'énergie mécanique et, comprenant une enceinte hermétique (20, 30) présentant un volume susceptible d'alternativement croître et décroître en fonction des variations de la température environnante, **caractérisé en ce que** ladite enceinte hermétique contient un mélange de réactifs, comprenant un alliage métallique agencé au contact d'un gaz et, susceptible de donner lieu à au moins un changement de phase en fonction des variations de la température environnante,

ledit mélange de réactifs présentant un coefficient ΔP/ΔT sensiblement supérieur à 0.01 bar.°C$^{-1}$ dans des plages de fonctionnement,

en température, comprise sensiblement entre 0 et 50°C et,
en pression, comprise sensiblement entre 1 et 50 bars et,

étant choisi de manière à ce que la différence minimale possible entre des températures, dans ladite enceinte hermétique, respectivement associées à des variations consécutives contraires de la température environnante soit sensiblement inférieure ou égale à 4°C.

2. Mécanisme pneumatique selon la revendication 1, **caractérisé en ce que** ledit alliage métallique est un alliage d'hydrure métallique, ledit gaz étant du dihydrogène ou du dideutérium.

3. Mécanisme pneumatique selon la revendication 1 ou 2, **caractérisé en ce que** ledit alliage d'hydrure métallique répond à une formulation générale du type $AB_5$ dans laquelle A est un métal ou un mélange métallique et B est un métal ou un mélange métallique.

4. Mécanisme pneumatique selon la revendication 3, **caractérisé en ce que** A comporte l'un au moins des éléments choisis dans le groupe comprenant Ce, La, Nd, Pr.

5. Mécanisme pneumatique selon la revendication 3 ou 4, **caractérisé en ce que** B comporte l'un au moins des éléments choisis dans le groupe comprenant Co, Ni, Sn.

6. Mécanisme pneumatique selon la revendication 3, **caractérisé en ce que** ledit alliage métallique est choisi dans le groupe comprenant (La, Ce)(Ni, Co)$_5$, (La, Ce)(Ni, Co)$_{5+\varepsilon}$ et (La, Ce)(Ni, Sn)$_{5+\varepsilon}$.

7. Mécanisme pneumatique selon l'une quelconque des revendications précédentes, **caractérisé en ce que** ledit coefficient ΔP/ΔT est sensiblement supérieur à 0.01 bar.°C$^{-1}$ dans une plage de fonctionnement préférée, en température, comprise sensiblement entre 15 et 40°C, plus préférablement entre 15 et 30°C.

8. Mécanisme pneumatique selon l'une quelconque des revendications précédentes, **caractérisé en ce que** ledit coefficient ΔP/ΔT est sensiblement supérieur à 0.01 bar.°C$^{-1}$ dans une plage de fonctionnement préférée, en pression, comprise sensiblement entre 1 et 20 bars, plus préférablement entre 1 et 10 bars.

9. Mécanisme pneumatique selon l'une quelconque des revendications précédentes, **caractérisé en ce que** ledit coefficient ΔP/ΔT est sensiblement supérieur à 0.05 bar.°C$^{-1}$, plus préférablement supérieur à 0.1 bar.°C$^{-1}$.

10. Mécanisme pneumatique selon l'une quelconque des revendications précédentes, **caractérisé en ce que** ladite différence minimale possible entre les températures associées à des variations consécutives contraires de la température environnante est préférablement inférieure à 2°C, encore plus préférablement inférieure à 1°C.

11. Mécanisme pneumatique selon l'une quelconque des revendications précédentes, **caractérisé en ce que** ladite enceinte hermétique (20, 30) est configurée de telle manière que les variations de son volume sont associées à sa déformation suivant une seule direction.

12. Pièce d'horlogerie (21, 31) comportant un mécanisme pneumatique selon l'une quelconque des revendications 1 à 11, **caractérisée en ce qu'**elle comporte un système de transformation associé au moins indirectement, d'une part, à ladite enceinte hermétique (20, 30) et, d'autre part, à ladite source d'énergie mécanique pour recharger cette dernière à partir des variations de volume de ladite enceinte hermétique.

Fig. 1

Fig. 2

Fig. 3

**(La,Ce)(Ni,Co)₅**

**Fig. 4a**

$(La,Ce)(Ni,Co)_{5+\varepsilon}$

Fig. 4b

(La,Ce)(Ni,Sn)$_{5+\varepsilon}$

**Fig. 4c**

**Fig. 5**

20

21

**Fig. 6**

30

31

Europäisches
Patentamt

European
Patent Office

Office européen
des brevets

**RAPPORT DE RECHERCHE EUROPEENNE**

Numéro de la demande

EP 10 19 6325

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP 2003 028049 A (SEIKO EPSON CORP) 29 janvier 2003 (2003-01-29) | 1 | INV. G04B5/22 |
| A | * alinéa [0032] * | 2 | |
| | ----- | | |
| A | JP 2003 120514 A (SEIKO EPSON CORP) 23 avril 2003 (2003-04-23) * le document en entier * | 1 | |
| | ----- | | |

DOMAINES TECHNIQUES
RECHERCHES (IPC)

G04B

Le présent rapport a été établi pour toutes les revendications

| Lieu de la recherche | Date d'achèvement de la recherche | Examinateur |
|---|---|---|
| La Haye | 20 juin 2011 | Lupo, Angelo |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
..................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 19 6325

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-06-2011

| Document brevet cité au rapport de recherche | Date de publication | Membre(s) de la famille de brevet(s) | Date de publication |
|---|---|---|---|
| JP 2003028049  A | 29-01-2003 | AUCUN | |
| JP 2003120514  A | 23-04-2003 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CH 198355
- CH 199527